# EUROPEAN PATENT APPLICATION

(11) **EP 2 814 274 A1**
(43) Date of publication of application: **17.12.2014**
(21) Application number: 13172099.7
(22) Date of filing: 14.06.2013
(51) Int. Cl.: H04W 12/06, H04W 76/02, H04W 4/20

(54) **Method for authenticating a connection between at least two devices**

(71) Applicant: Hakvoort, Michiel Christiaan, 7543 BE Enschede (NL)
(72) Inventor: Hakvoort, Michiel Christiaan, 7543 BE Enschede (NL)
(74) Representative: 't Jong, Bastiaan Jacob

(57) **Abstract**

The invention relates to a method for authenticating a connection between two devices, which method comprises the steps of:
- generating a first signal and registering the first signal on a first device;
- generating a second signal and registering the second signal on a second device;
- comparing the first signal with the second signal;
- validating a connection between the first and second devices, when the first and second signal match.

## Description

The invention relates to a method for authenticating a connection between at least two devices.

A connection can be setup between two devices, like for example a mobile phone or tablet, by using known technology like a wireless network or Bluetooth. It is desired to have some kind of authentication when setting up such a connection.

A known method is to set a password on the first device and let the user of the second device enter the password when the second device connects to the first device. In such a situation, it is necessary that both devices are setup correctly and that the first device acts as a host, and the second device as a client. Thus the client device needs to be aware of the host device.

If for example two mobile phone users want to exchange some content, like a photo or a music file, it is difficult to setup a connection as mentioned above. Especially, when such a connection is only used sporadic. Typically, users will then use email, SMS or an instant messaging service. It will still require one user to enter account details of the other user, like an email address or a phone number.

EP 2479965 shows a method for connecting two or more devices. The devices to be connected need to be on the same local network to establish a connection between the devices. One of the devices is used as a host device, while the other devices acts as client devices.

The devices to be connected are placed for example next to each other, whereafter a signal, like a sound or a vibration, is generated by a user. Both devices will register this same signal. The client device will send the registered signal to the host device, which will compare the received signal with the signal it has registered. If the host device determines that the registration of the client device matches the registration of the host device, then the client device is allowed to connect to the host device.

The disadvantage of this known method is that both devices need to be able to register the same signal, and that the client device needs to be able to find the host device, for example by entering an ip-address.

Accordingly, it is an object of the invention to reduce or even resolve the aforementioned disadvantages.

This object is achieved with a method according to the invention, which method comprises the steps of:
- generating a first signal and registering the first signal on a first device;
- generating a second signal and registering the second signal on a second device;
- comparing the first signal with the second signal;
- validating a connection between the first and second devices, when the first and second signal match.

According to the invention two separate signals are generated, one for each device. This enables one to connect two devices, which are spaced apart over a distance, which would otherwise not make it possible, that both devices register the same signal. So, the devices could be in different rooms or even on different continents.

When these signals are registered by the devices, the signals are compared and if the signals match, a connection between the devices is validated.

Thus, there is no need to preset a password, or the like, at one of the devices. The generated signals in itself are in fact the password.

The first and second signal are typically generated and compared simultaneously, but it is also possible to take into account a time delay of one of the signals, such that the signals do not need to be generated at exactly the same time.

Although, the invention will typically be performed with two devices, it is also possible to authenticate three or more devices with the invention.

Preferably, the first and second signal is generated by tapping on the respective device. Most mobile devices nowadays have touch screens, which make it easy to register a signal by tapping. Tapping can also generate a sound signal, which can easily be picked up by a microphone of the device.

In a preferred embodiment of the method according to the invention the first and second signal each have a pattern and match the first and second signal when the patterns of both signals correspond.

By looking at the pattern of a signal, other aspects of a signal, such as amplitude, noise level and the exact time at which the signal is registered can be filtered out, while still being able to match the signals reliably.

If more devices are tried to be connected at the same time, the registering and comparison of the registered signals of all devices will continue as long as necessary to determine which signals and accordingly which devices should be paired based on the uniqueness of the patterns.

In a further preferred embodiment of the method according to the invention the first and second signals are send to a central server and the connection between the first and second devices is validated upon a unique match between the first and second signal.

Typically mobile devices are connected to a network, like a cell phone network or a wireless local network. Via this network, the devices will always be able to reach a central server. The devices to be connected do not need to be on the same network and aware of the other device, as long as both devices can reach the central server.

The central server will gather the registered signals and start comparing the signals. If a match between signals is determined, the central server also knows, how the devices can be reached. With these connection details, the server can route data between the two devices to establish a connection between the two devices, or the server can send the connection details, after validation based on a match of the signals, to the devices, such that the devices can setup a peer to peer connection between them.

Additional criteria can be set for the comparison of signals by the server. Such a criteria could for example be that only signals arriving at the server within the same time frame are compared. Also, a criteria could be that signals are detected as a match, when the signals are not identical, but have a similarity which exceeds a preset threshold.

Preferably, the connection between the first and second device is created after validation. In this way it is ensured that the devices do not need to be aware of each other when registering the signal. Especially in the case, when a central server is used, the devices will at first have only a connection with the central server. Only after a match between registered signals is ascertained the connection will be established between the devices

In yet another embodiment of the method according to the invention a match between the first and second signal is ascertained when the first and second signal have a similarity of over a predefined threshold.

Because the signals are generated separately, for example by one or two users, tapping a same rhythm, the two signals will most probably be not identical. Therefor, it is preferred to define a threshold, such that when sufficient similarity between the two signals is detected, a match can be ascertained. The threshold could for example be predefined on 90%.

In still another embodiment of the method according to the invention the similarity of the first and second signal is ascertained by correlating both signals.

These and other features of the invention will be elucidated in conjunction with the accompanying drawings.
Figure 1 shows a flow chart of a first embodiment of the method according to the invention.
Figure 2 shows a schematic view of a second embodiment of the method according to the invention.
Figure 3 shows a schematic view of a third embodiment of the method according to the invention.

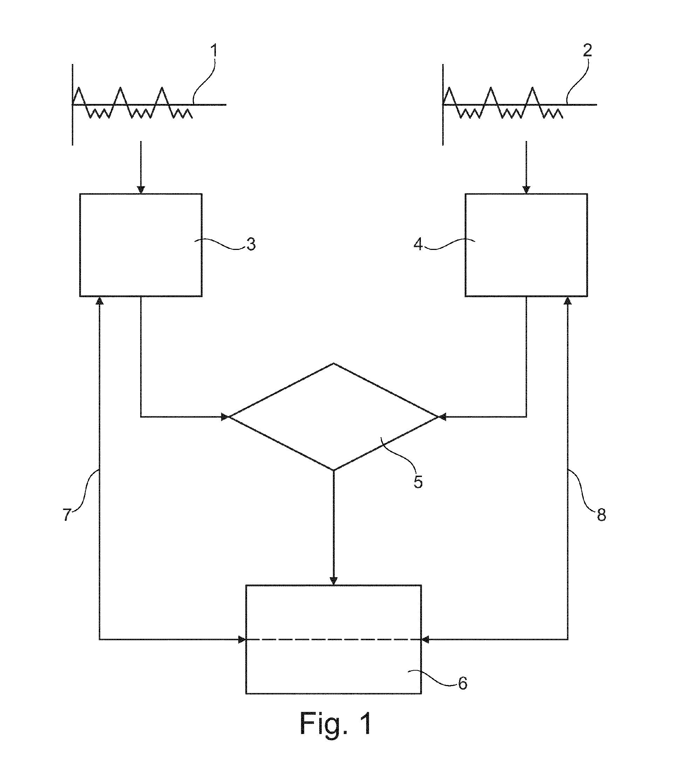

Figure 1 shows a flow chart of a first embodiment of the method according to the invention. According to the invention a first signal 1 is generated and a second, separate, signal 2 is generated.

The first signal 1 is registered on a first device 3, while the second signal 2 is registered on a second device 4.

Preferably, while these signals 1, 2 are being registered, the signals 1, 2 are also compared at flow chart block 5 to determine, whether these signals 1, 2 match or not.

If a match between the signals 1, 2 is ascertained, then a connection 7, 8 between the devices 3, 4 is validated.

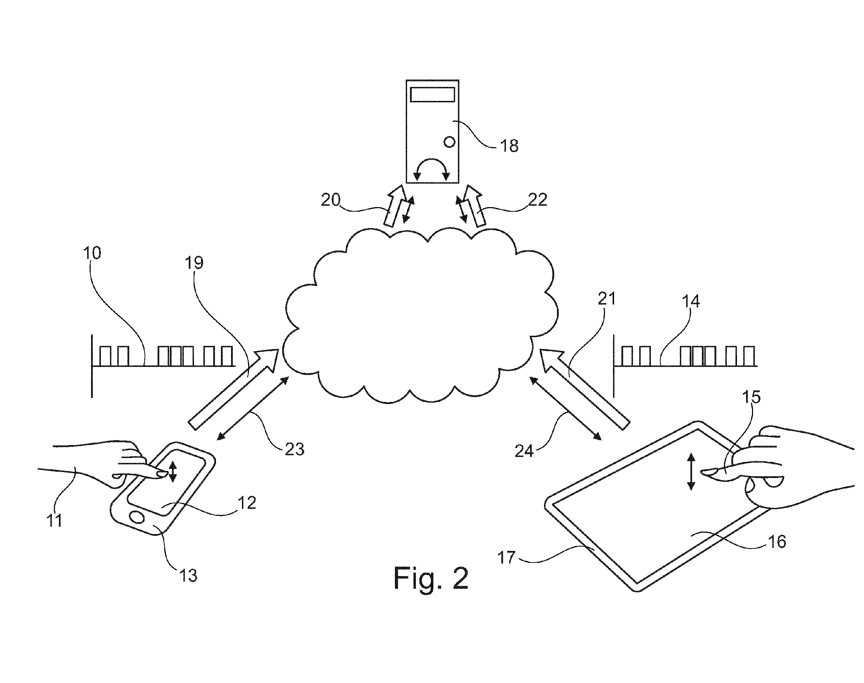

Figure 2 shows a schematic view of a second embodiment of the method according to the invention. A first signal 10 is generated by a user tapping with a finger 11 on the touch screen 12 of a mobile phone 13.

At the same time, a second signal 14 is generated by a user tapping with a finger 15 on the touch screen 16 of a tablet 17.

Both devices 13, 17 are preferably provided with a software application, such that the devices 13, 17 can register the signals 10, 14 and can connect to a central server 18.

The registered first signal 10 is send from the mobile phone 13 via a network 19, 20 to the server 18. The registered second signal 14 is send from the tablet 17 via a network 21, 22 to the central server 18.

The central server 18 will monitor the incoming signals 10, 14 and try to correlate the signals 10, 14. If a certain threshold is reached by the correlation coefficient, then the server 18 will validate a connection between the devices 13, 17. If the server 18 receives more signals than the signals 10, 14, then the server also needs to check that there is an exclusive correlation between the signals 10, 14. This is to make sure the connection has to be setup between these two devices 13, 17. In this embodiment, the central server 18 will route data 23 from the first device 13 and data 24 from the second device 17 via the server 18, such that a connection is established.

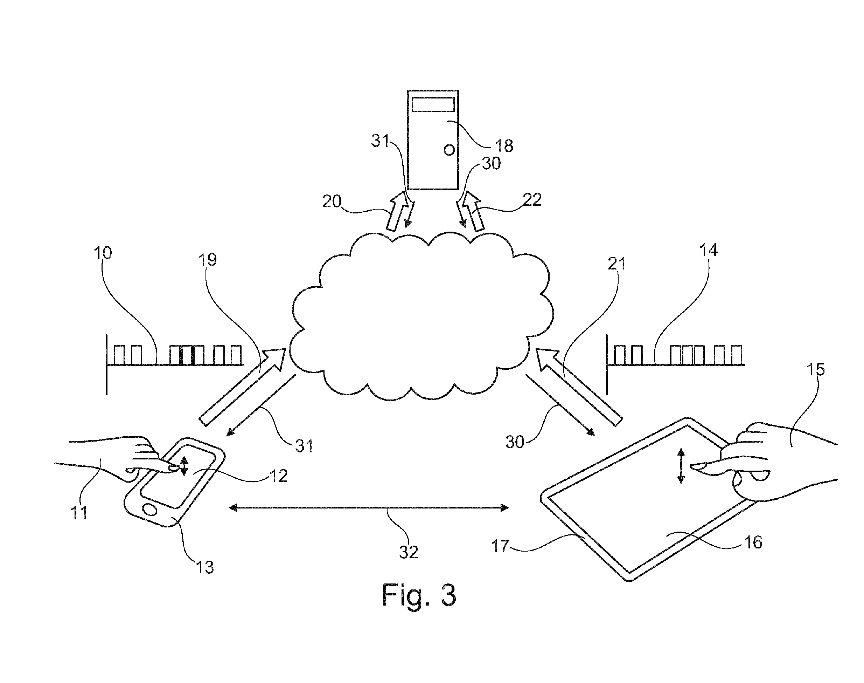

Figure 3 shows a schematic view of a third embodiment of the method according to the invention. This embodiment corresponds largely with the embodiment of figure 2, so similar features are designated with the same reference signs.

The generating of the first signal 10 and the second signal 14 is the same as with the embodiment according to figure 2, as well as the registering and comparing of the signals 10, 14 by the central server 18.

However, as soon as the central server 18 establishes a match between the signals 10, 14, the connection details 30 of the first device 13 are send by the server 18 to the second device 17 and the connection details 31 of the second device 17 are send to the first device 13.

With these connection details 30, 31 the devices 13, 17 are able to setup a direct connection 32 to exchange data.

## Claims

1. Method for authenticating a connection between two devices, which method comprises the steps of:
- generating a first signal and registering the first signal on a first device;
- generating a second signal and registering the second signal on a second device;
- comparing the first signal with the second signal;
- validating a connection between the first and second devices, when the first and second signal match.

2. Method according to claim 1, wherein the first and second signal is generated by tapping on the respective device.

3. Method according to claim 1 or 2, wherein the first and second signal each have a pattern and wherein the first and second signal match when the patterns of both signals correspond.

4. Method according to any of the preceding claims, wherein the first and second signals are send to a central server and wherein the connection between the first and second devices is validated upon a unique match between the first and second signal.

5. Method according to claim 4, wherein the connection between the first and second devices is created after validation.

6. Method according to any of the preceding claims, wherein a match between the first and second signal is ascertained when the first and second signal have a similarity of over a predefined threshold.

7. Method according to claim 6, wherein the threshold is 90%.

8. Method according to claim 6 or 7, wherein the similarity of the first and second signal is ascertained by correlating both signals.
